# FASCICULE DE BREVET EUROPEEN

(11) **EP 3 462 519 B1**
(45) Date de publication et mention de la délivrance du brevet: **15.04.2020**
(21) Numéro de dépôt: 18197620.0
(22) Date de dépôt: 28.09.2018
(51) Int. Cl.: H01M 2/10, B63G 8/00

(54) **ENSEMBLE BATTERIE POUR SOUS-MARIN**
BATTERIEBLOCK FÜR U-BOOT
BATTERY ASSEMBLY FOR A SUBMARINE

(30) Priorité: 29.09.2017 FR 1700995
(43) Date de publication de la demande: 03.04.2019
(73) Titulaire: Naval Group, 75015 Paris (FR)
(72) Inventeur: GARANS, Cyrille, 56311 LORIENT (FR)
(74) Mandataire: Lavoix

(56) Documents cités:
- WO-A1-2016/099785
- FR-A- 431 271
- GB-A- 947 753

## Description

La présente invention concerne un ensemble batterie pour sous-marin comportant au moins un assemblage mécanique et électrique de branches, chaque branche comportant un module comportant une pluralité d'accumulateurs.

L'invention se situe dans le domaine de la fourniture d'énergie aux véhicules sous-marins.

Les véhicules sous-marins nécessitent une alimentation électrique autonome. A cet effet, de manière classique, un sous-marin est équipé d'un ou plusieurs ensembles batteries, comportant chacun une pluralité d'accumulateurs, installés dans un emplacement dédié du véhicule sous-marin.

En effet, un accumulateur est une brique énergétique élémentaire servant au stockage de l'énergie, et il est connu d'assembler, mécaniquement et électriquement, une pluralité d'accumulateurs dans un module d'accumulateurs. De tels modules, ou éventuellement des ensembles de modules d'accumulateurs, également appelés packs, sont associés chacun à un module de commande et de surveillance pour former une branche. Un ensemble batterie est formé d'une pluralité de branches assemblées mécaniquement et électriquement.

Un module de commande et de surveillance est également appelé module BMM pour « battery management module ». Un opérateur de maintenance a besoin d'accéder aux modules de commande et de surveillance.

Pour fournir la puissance électrique nécessaire à un véhicule sous-marin, un ou plusieurs ensembles batteries, constitué chacun d'un nombre P de branches assemblées mécaniquement et électriquement est nécessaire, P étant généralement compris entre 50 et 300.

L'installation d'un tel ensemble batterie nécessite l'installation de dispositifs de calage des branches, entre elles et par rapport à l'emplacement d'accueil, par exemple la coque du sous-marin, afin de résister aux mouvements de type roulis, tangage, gîte, assiette, ainsi que lors d'un éventuel choc.

De plus, comme expliqué ci-dessus, les modules de commande et de surveillance doivent être accessibles.

Il existe des solutions connues d'empilement de modules d'accumulateurs et de positionnement des modules de commande et de surveillance.

Le document GB 947 753 A décrit un ensemble batterie adapté pour sous-marins, de facteur de remplissage augmenté par des hauteurs de modules de tailles variables.

Le document FR 431 271 A décrit une installation de batterie d'accumulateurs pour bateaux sous-marins, adaptée à être positionnée dans une cale de forme arrondie.

De manière connue, les modules d'accumulateurs et les modules de commande et de surveillance sont intégrés dans des boîtiers de forme parallélépipédique.

Selon une première solution connue, les modules d'accumulateurs sont empilés horizontalement, pour former des assemblages sensiblement parallélépipédiques comportant des travées étroites permettant l'accès aux modules de commande et de surveillance. Cet assemblage entraîne une perte volumique du fait de la nécessité de former des travées d'accès aux modules de commande et de surveillance de largeur suffisante pour le passage d'un opérateur.

Selon une deuxième solution connue, les modules d'accumulateurs sont empilés verticalement, et les modules de commande et de surveillance sont positionnés au-dessus des modules d'accumulateurs, de manière à être accessibles par le dessus. Lorsque les modules sont installés dans la coque d'un sous-marin, l'accès par le dessus n'est possible que pour les branches centrales, ce qui nécessite un branchement particulier des modules de commande et de surveillance par rapport aux modules d'accumulateurs positionnés sur les bords.

De plus, dans ces deux solutions, il est nécessaire de prévoir des dispositifs de calage spécifiques par rapport à la coque d'un sous-marin.

L'invention a pour objectif de remédier aux inconvénients précités, en proposant un ensemble batterie mieux adapté pour un véhicule sous-marin, permettant un assemblage plus facile et un accès aisé aux modules de commande et de surveillance.

A cet effet, l'invention propose un ensemble batterie pour sous-marin comportant au moins un assemblage mécanique et électrique de branches, chaque branche comportant au moins un module d'accumulateurs connectés électriquement. Chaque branche de cet ensemble a une forme géométrique tridimensionnelle comportant deux faces parallèles et opposées trapézoïdales, et un dit assemblage de branches est formé par un empilement en éventail de branches, formant une tranche de profil sensiblement semi-circulaire.

Avantageusement, la forme des branches est adaptée à la forme semi-circulaire d'une coque de véhicule sous-marin, ce qui permet d'optimiser le remplissage volumique.

L'ensemble batterie selon l'invention peut également présenter une ou plusieurs des caractéristiques ci-dessous, prises indépendamment ou selon toutes combinaisons techniquement acceptables.

Chaque branche comporte un module d'accumulateurs et un module de contrôle et de surveillance dudit module d'accumulateurs, et chaque module d'accumulateurs comporte un étui tridimensionnel ayant une première base et une deuxième base rectangulaires et parallèles, reliées par deux faces principales parallèles et opposées trapézoïdales, et par deux faces latérales opposées rectangulaires.

Chacune des première et deuxième bases rectangulaires a des dimensions de longueur et de largeur, la longueur de la première base étant supérieure à la longueur de la deuxième base, et la largeur de la première base étant sensiblement égale à la largeur de la deuxième base.

Chaque module de contrôle et de surveillance comporte un étui de forme analogue à la forme de l'étui du module d'accumulateurs, chaque branche comportant un module de contrôle et de surveillance positionné en prolongement de la deuxième base rectangulaire du module d'accumulateurs.

Chaque module d'accumulateurs comporte un nombre N d'accumulateurs de type Lithium-ion.

Chaque assemblage comporte un nombre prédéterminé de branches de dimensions identiques.

L'ensemble batterie comporte une pluralité d'assemblages mécaniques et électriques de branches, un premier et un deuxième assemblages adjacents étant positionnés de manière à ce qu'une des faces trapézoïdales de chaque branche du premier assemblage soit en contact avec une des faces trapézoïdales d'une branche correspondante du deuxième assemblage

Selon un autre aspect, l'invention concerne un véhicule sous-marin comportant un logement adapté à contenir un ensemble batterie comportant un ensemble batterie tel que brièvement décrit ci-dessus.

Dans un mode de réalisation, ce véhicule est tel que le logement comporte une paroi amovible permettant un accès à une zone centrale semi-circulaire d'accès aux modules de contrôle et de commande de chaque branche de chaque assemblage de l'ensemble batterie.

Dans un mode de réalisation, le logement comporte des zones latérales de positionnement d'éléments d'assemblage.

D'autres caractéristiques et avantages de l'invention ressortiront de la description qui en est donnée ci-dessous, à titre indicatif et nullement limitatif, en référence aux figures annexées, parmi lesquelles :
- la figure 1 est une représentation schématique d'un ensemble batterie comportant un assemblage de branches selon un mode de réalisation de l'invention ;
- la figure 2 est une vue en coupe d'un assemblage de branches selon la figure 1, installé dans un local d'accueil ;
- la figure 3 est une vue schématique en coupe d'un module d'accumulateurs et d'un module de commande et de surveillance associé formant une branche ;
- la figure 4 est une représentation schématique en perspective d'un exemple de branche comportant un module d'accumulateurs et un module de commande et de surveillance ;
- la figure 5 illustre schématiquement l'empilement des modules d'accumulateurs pour former un assemblage selon un mode de réalisation.

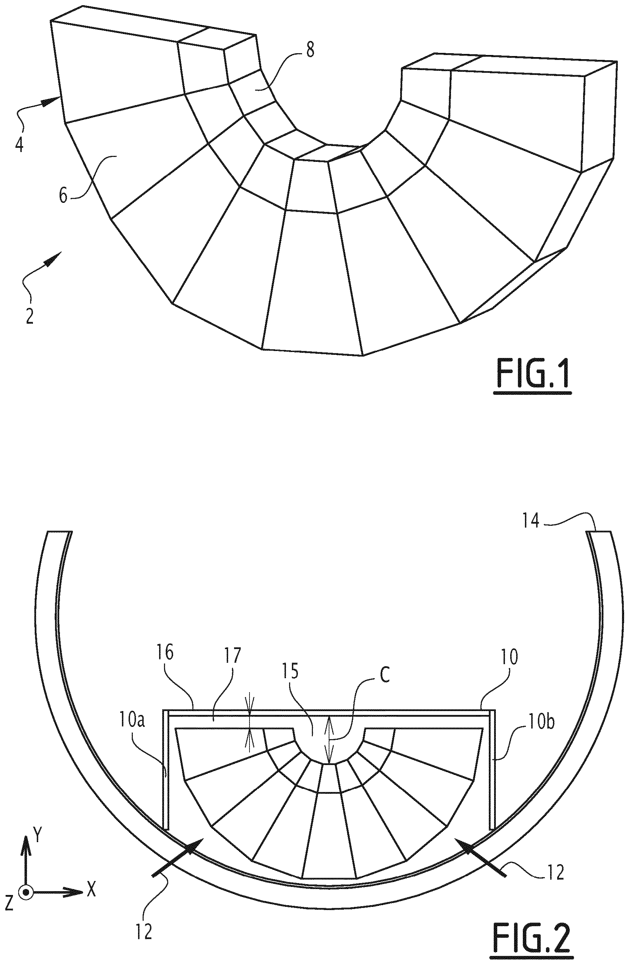

Un ensemble batterie comportant au moins un assemblage de branches, chaque branche comportant un module d'accumulateurs et un module de commande et de surveillance associé sera décrit ci-après dans un mode de réalisation, en référence aux figures 1 à 5.

Un tel ensemble batterie est adapté pour installation dans un logement à plancher ayant un profil concave, de forme semi-circulaire ou elliptique, comme par exemple la coque d'un sous-marin.

La figure 1 illustre un assemblage 2 mécanique et électrique de branches 4, également appelé tranche, chaque branche 4 comportant un module d'accumulateurs 6 et un module de commande et de surveillance 8. Les modules 8 de commande et de surveillance seront appelés ci-après modules BMM.

Les branchements mécaniques et électriques ne sont pas illustrés sur les figures.

Un ou plusieurs assemblages 2 forment un ensemble batterie installé sur un plancher 14 de forme sensiblement circulaire tel qu'illustré à la figure 2.

Chaque module d'accumulateurs 6 et chaque module BMM 8 est intégré dans un étui de forme géométrique tridimensionnelle adaptée pour un empilement en éventail.

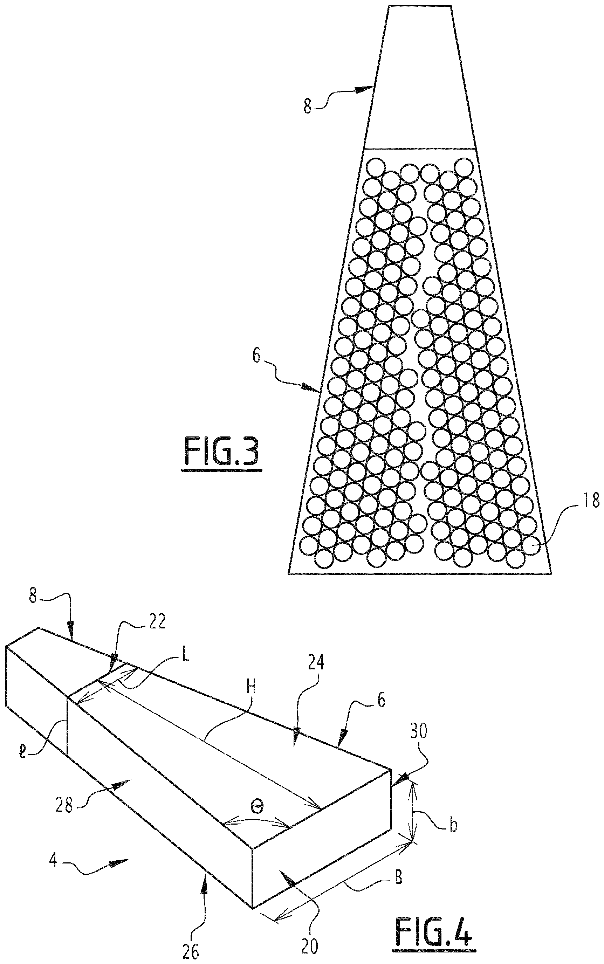

Comme illustré schématiquement à la figure 3, chaque module d'accumulateurs 6 comporte une pluralité d'accumulateurs 18 , assemblés mécaniquement et électriquement de la manière la plus appropriée par rapport à la forme géométrique du module d'accumulateurs qui sera décrite plus en détail ci-après.

Par exemple, un module d'accumulateurs comporte un nombre N d'accumulateurs.

De préférence, on utilise des accumulateurs de type Lithium-ion, qui apportent un gain important en densité massique d'énergie par rapport aux accumulateurs au plomb.

Dans un mode de réalisation, N=186, et chaque accumulateur stocke par exemple 150 Wh ce qui permet un stockage total de 27,9 kWh. Comme illustré à la figure 4, l'étui d'un module d'accumulateurs 6 comporte six faces, une première face rectangulaire 20 dite première base, de longueur B et de largeur b, et une deuxième face 22 parallèle à la première face rectangulaire 20, également rectangulaire, dite deuxième base, de dimensions longueur L et largeur l. La longueur L de la deuxième face 22 est inférieure à la longueur B.

De préférence, la largeur I de la deuxième face 22 est égale à largeur b de la première face.

L'étui comporte également une troisième face 24 et une quatrième face 26, dites faces principales, en forme de trapèze régulier, de bases respectives de dimension B et L, d'angle de base Θ et de hauteur H. L'angle de base Θ est inférieur à 90°.

Enfin, l'étui comporte une cinquième face 28 et une sixième face 30, dites faces latérales, de forme rectangulaire.

Ainsi, chaque module d'accumulateurs a une forme tridimensionnelle adaptée pour un empilement en éventail par les faces latérales, comme illustré dans les figures 1 et 2.

Chaque module BMM 8 a une forme analogue, adaptée à être positionnée en prolongement de la deuxième base 22. Ainsi, la première base de chaque module BMM 8 a une forme rectangulaire de mêmes dimensions que la deuxième base 22. Chaque module BMM comporte également deux faces principales en forme de trapèze, de même angle de base Θ que les faces principales 24 et 26, et deux faces latérales.

De préférence, toutes les branches 4 ont les mêmes dimensions, ce qui facilite leur fabrication et favorise l'assemblage en éventail proposé.

Avantageusement, grâce au choix de ces formes, les branches 4 sont assemblées par empilement des faces latérales et forment un assemblage de base sensiblement semi-circulaire, bien adaptée à la forme d'une coque de sous-marin.

Avantageusement, les faces latérales des branches sont de mêmes dimensions et l'assemblage ne nécessite pas de dispositif de calage supplémentaire entre deux branches.

Comme illustré à la figure 2, l'ensemble batterie est positionné dans un logement 10 et protégé par un plafond 16 comportant une ou plusieurs trappes d'accès.

A la figure 2, on a illustré une vue en coupe selon un plan (X, Y) d'un ensemble batterie disposé dans le logement 10 sur le plancher d'une coque 14.

Des espaces latéraux 12 entre l'ensemble batterie et les parois latérales 10a, 10b du logement 10 permettent de positionner des éléments d'assemblage (non représentés), par exemple des tuyaux de raccordement fluidique des modules 6.

Tous les modules BMM 8 sont accessibles par une zone d'accès 15 en forme semi-circulaire de hauteur C.

La hauteur C est choisie pour permettre un passage suffisant pour un opérateur de maintenance, de préférence supérieure à 650 mm, et par exemple égale à 680 mm.

De plus, une zone 17 de dégagement et de manutention, permettant à un opérateur de maintenance d'accéder à chacun des modules d'accumulateurs 6 est aménagée sous la paroi 16. Par exemple, la zone 17 de dégagement et de manutention a une hauteur D sous la paroi 16 de préférence supérieure à 150 mm, et par exemple égale à 170 mm.

De préférence, la paroi d'accès 16 est partiellement ou totalement amovible, pour permettre l'accès à la zone 15 d'accès aux modules BMM et à la zone 17 de dégagement et de manutention.

Avantageusement, une seule zone d'accès centralisée 15 permet l'accès à tous les modules BMM 8.

Avantageusement, la forme choisie pour les modules et leur assemblage permet de minimiser l'espace nécessaire pour la zone 15 d'accès aux modules BMM.

De plus, grâce à la forme des branches, il n'est pas nécessaire de prévoir un système de calage selon les directions X et Y du plan représenté à la figure 2.

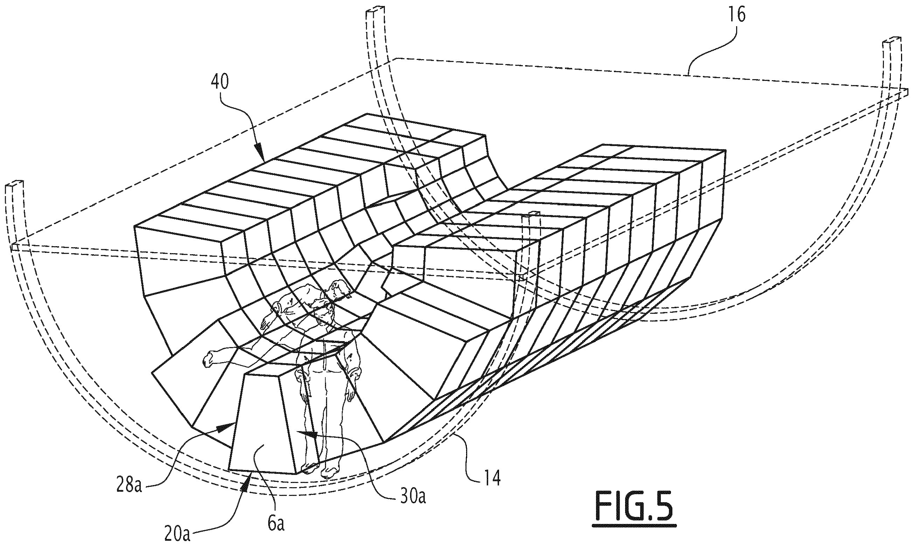

La figure 5 illustre schématiquement un ensemble batterie 40 comportant une pluralité d'assemblages 2 de branches 4, en cours de montage.

Chaque assemblage de branches est constitué en positionnant d'abord un module 6a central, dont la première base 20a est positionnée sur le plancher 14, et ensuite l'assemblage est constitué en empilant, de part et d'autre, sur chaque face latérale 28a et 30a du module 6a, un autre module d'accumulateurs.

Des dispositifs de connexion mécanique et électrique adéquats entre modules d'accumulateurs, non représentés sur les figures, sont prévus à cet effet.

Le même type d'assemblage est appliqué pour les modules BMM 8.

Une connexion électrique inter BMM est à prévoir (pas de liaisons mécaniques entre les BMM).

Dans un mode de réalisation, illustré à la figure 5, un ensemble batterie est construit par assemblages successifs de modules d'accumulateurs, puis connexion et assemblage des modules BMM.

En variante, l'ensemble batterie 40 est assemblé en réunissant des branches 2 déjà assemblées, chaque branche comportant un module d'accumulateurs 6 et un module BMM 8.

Des éventuels dispositifs de calage sont ajoutés, soit au fur et à mesure de l'assemblage des branches, soit après réalisation de l'ensemble batterie 40, afin d'assurer le positionnement de l'ensemble batterie dans le local 10, et sa stabilité par rapport aux mouvements du sous-marin porteur en mouvement ou aux chocs subis par celui-ci.

Les dispositifs de calage ne sont pas représentés, mais il est entendu qu'il est possible de les réaliser de diverses manières à la portée de l'homme du métier.

Avantageusement, l'ensemble batterie selon les modes de réalisation décrits ci-dessus, est optimisé pour une utilisation dans un véhicule sous-marin ou plus généralement, tout logement ayant une forme de plancher concave, semi-circulaire ou elliptique.

## Revendications

1. Ensemble batterie pour sous-marin comportant au moins un assemblage (2) mécanique et électrique de branches (4), chaque branche (4) comportant au moins un module (6) d'accumulateurs connectés électriquement, **caractérisé en ce que** chaque branche (4) a une forme géométrique tridimensionnelle comportant deux faces (24, 26) parallèles et opposées trapézoïdales, et **en ce qu'**un dit assemblage (2) de branches est formé par un empilement en éventail de branches (4), formant une tranche de profil sensiblement semi-circulaire.

2. Ensemble batterie selon la revendication 1 dans lequel chaque branche (4) comporte un module (6) d'accumulateurs et un module (8) de contrôle et de surveillance dudit module d'accumulateurs, et dans lequel chaque module d'accumulateurs comporte un étui tridimensionnel ayant une première base (20) et une deuxième base (22) rectangulaires et parallèles, reliées par deux faces principales (24, 26) parallèles et opposées trapézoïdales, et par deux faces latérales (28, 30) opposées rectangulaires.

3. Ensemble batterie selon la revendication 2 dans lequel chacune des première et deuxième bases rectangulaires (20, 22) a des dimensions de longueur (B, L) et de largeur (b,l,) la longueur (B) de la première base (20) étant supérieure à la longueur (L) de la deuxième base (22), et la largeur (b) de la première base étant sensiblement égale à la largeur (l) de la deuxième base.

4. Ensemble batterie selon l'une des revendications 2 ou 3, dans lequel chaque module (8) de contrôle et de surveillance comporte un étui de forme analogue à la forme de l'étui du module (6) d'accumulateurs, chaque branche (4) comportant un module (8) de contrôle et de surveillance positionné en prolongement de la deuxième base rectangulaire (22) du module (6) d'accumulateurs.

5. Ensemble batterie selon l'une quelconque des revendications précédentes, dans lequel chaque module (6) d'accumulateurs comporte un nombre N d'accumulateurs (18) de type Lithium-ion.

6. Ensemble batterie selon l'une quelconque des revendications précédentes, dans lequel chaque assemblage (2) comporte un nombre prédéterminé de branches de dimensions identiques.

7. Ensemble batterie selon l'une quelconque des revendications 1 à 6, comportant une pluralité d'assemblages (2) mécaniques et électriques de branches, un premier et un deuxième assemblages adjacents étant positionnés de manière à ce qu'une des faces trapézoïdales de chaque branche du premier assemblage soit en contact avec une des faces trapézoïdales d'une branche correspondante du deuxième assemblage.

8. Véhicule sous-marin comportant un logement adapté à contenir un ensemble batterie comportant un ensemble batterie selon l'une des revendications 1 à 7.

9. Véhicule sous-marin selon la revendication 8 dans lequel ledit logement comporte une paroi amovible permettant un accès à une zone centrale semi-circulaire d'accès aux modules de contrôle et de commande de chaque branche de chaque assemblage de l'ensemble batterie.

10. Véhicule sous-marin selon la revendication 9, dans lequel ledit logement comporte des zones latérales de positionnement d'éléments d'assemblage.

## Patentansprüche

1. Batterieanordnung für ein Unterwasserfahrzeug, die mindestens eine mechanische und elektrische Baugruppe (2) aus Sektoren (4) aufweist, wobei jeder Sektor (4) mindestens ein Modul (6) von elektrisch verbundenen Akkumulatoren aufweist, **dadurch gekennzeichnet, dass** jeder Sektor (4) eine dreidimensionale geometrische Form hat, die zwei parallele und entgegengesetzte trapezförmige Flächen (24, 26) aufweist und dass eine genannte Baugruppe (2) aus Sektoren durch eine fächerförmige Stapelung von Sektoren (4) gebildet ist, wobei eine Scheibe mit einem im wesentlichen halbkreisförmigen Profil gebildet wird.

2. Batterieanordnung nach Anspruch 1, bei der jeder Sektor (4) ein Ackumulatormodul (6) und ein Modul (8) zum Steuern und Überwachen des Akkumulatormoduls aufweist und bei der jedes Akkumulatormodul einen dreidimensionalen Kasten mit einer ersten Basis (20) und einer zweiten Basis (22), die rechteckig ausgebildet sind und parallel liegen und durch zwei parallele und entgegengesetzte trapezförmige Hauptflächen (24, 26) und durch zwei entgegengesetzte rechteckige Seitenflächen (28, 30) verbunden sind.

3. Batterieanordnung nach Anspruch 2, bei der jede der ersten und zweiten rechteckigen Basen (20, 22) Längenabmessungen (B, L) und Breitenabmessungen (b, I) aufweisen, wobei die Länge (B) der ersten Basis (20) größer als die Länge (L) der zweiten Basis (22) ist und die Breite (b) der ersten Basis im Wesentlichen gleich der Breite (l) der zweiten Basis ist.

4. Batterieanordnung nach einem der Ansprüche 2 oder 3, bei der jedes Steuer- und Überwachungsmodul (8) einen Kasten in einer Form analog zur Form des Kastens des Akkumulatormoduls (6) aufweist, wobei jeder Sektor (4) ein Steuer-und Überwachungsmodul (8) aufweist, das in der Verlängerung der zweiten rechteckigen Basis (22) des Akkumulatormoduls (6) positioniert ist.

5. Batterieanordnung nach einem beliebigen der vorhergehenden Ansprüche, bei der jedes Akkumulatormodul (6) eine Anzahl von N Lithium-Ionen Akkumulatoren (18) aufweist.

6. Batterieanordnung nach einem beliebigen der vorhergehenden Ansprüche, bei der jede Baugruppe (2) eine vorbestimmte Anzahl von Sektoren mit identischen Abmessungen aufweist.

7. Batterieanordnung nach einem beliebigen der Ansprüche 1 bis 6, die eine Mehrzahl von mechanischen und elektrischen Baugruppen (2) aus Sektoren aufweist, wobei eine erste und eine zweite benachbarte Baugruppe derart positioniert sind, dass eine der trapezförmige Flächen jedes Sektors der ersten Baugruppe in Kontakt mit einer der trapezförmige Flächen eines entsprechenden Sektors der zweiten Baugruppe ist.

8. Unterwasserfahrzeug, das einen Aufnahmeraum aufweist, der geeignet ist, eine Batterieanordnung aufzunehmen, und das eine Batterieanordnung nach einem der Ansprüche 1 bis 7 aufweist.

9. Unterwasserfahrzeug nach Anspruch 8, bei dem der Aufnahmeraum eine entfernbare Wand aufweist, die einen Zugang zu einer mittleren halbkreisförmigen Zone für den Zugang zu den Steuer- und Überwachungsmodulen jedes Sektors jeder Baugruppe der Batterieanordnung ermöglicht.

10. Unterwasserfahrzeug nach Anspruch 9, bei dem der Aufnahmeraum seitliche Zonen für die Positionierung von Elementen der Baugruppe aufweist.

## Claims

1. A battery pack for a submarine comprising at least one mechanical and electrical assembly (2) of branches (4), each branch (4) comprising at least one module (6) of electrically connected accumulators, **characterized in that** each branch (4) has a three-dimensional geometric shape comprising two parallel and opposite trapezoidal faces (24, 26), and **in that** one said assembly (2) of branches is formed by a fanned stack of branches (4), forming a section with a substantially semicircular profile.

2. The battery pack according to claim 1, wherein each branch (4) comprises an accumulator module (6) and a control and monitoring module (8) of said accumulator module, and each accumulator module comprises a three-dimensional case having a first base (20) and a second base (22) that are rectangular and parallel, connected by two parallel and opposite trapezoidal main faces (24, 26), and by two opposite rectangular side faces (28, 30).

3. The battery pack according to claim 2, wherein each of the first and second rectangular bases (20, 22) has length (B, L) and width (b, I) dimensions, the length (B) of the first base (20) being greater than the length (L) of the second base (22), and the width (b) of the first base being substantially equal to the width (I) of the second base.

4. The battery pack according to one of claims 2 or 3, wherein each control and monitoring module (8) comprises a case with a shape analogous to the shape of the case of the accumulator module, each branch (4) comprising a control and monitoring module (8) positioned in the extension of the second rectangular base of the accumulator module.

5. The battery pack according to any one of the preceding claims, wherein each accumulator module (6) comprises a number N of accumulators (18) of the lithium-ion type.

6. The battery pack according to any one of the preceding claims, wherein each assembly (2) comprises a predetermined number of branches with identical dimensions.

7. The battery pack according to any one of claims 1 to 6, comprising a plurality of mechanical and electrical assemblies (2) of branches, a first and second adjacent assembly being positioned such that one of the trapezoidal faces of each branch of the first assembly is in contact with one of the trapezoidal faces of the corresponding branch of the second assembly.

8. An underwater vehicle comprising a housing suitable for containing a battery pack comprising a battery pack according to one of claims 1 to 7.

9. The underwater vehicle according to claim 8, wherein said housing comprises a removable wall allowing access to a semicircular central zone for accessing the control and command modules of each branch of each assembly of the battery pack.

10. The underwater vehicle according to claim 9, wherein said housing comprises side zones for positioning assembly elements.
